# EUROPÄISCHE PATENTSCHRIFT

(11) **EP 3 417 462 B1**
(45) Veröffentlichungstag und Bekanntmachung des Hinweises auf die Patenterteilung: **29.01.2025**
(21) Anmeldenummer: 16710134.4
(22) Anmeldetag: 10.03.2016
(51) Int. Cl.: H01B 17/00, H01B 17/28, G01K 11/32

(54) **HOCHSPANNUNGSVORRICHTUNG MIT TEMPERATURERFASSUNG UND VERFAHREN ZUR TEMPERATURERFASSUNG EINER HOCHSPANNUNGSVORRICHTUNG**
HIGH-VOLTAGE DEVICE FEATURING TEMPERATURE MEASUREMENT, AND METHOD FOR MEASURING THE TEMPERATURE OF A HIGH-VOLTAGE DEVICE
DISPOSITIF HAUTE TENSION AVEC DÉTECTION DE TEMPÉRATURE ET PROCÉDÉ DE DÉTECTION DE TEMPÉRATURE D'UN DISPOSITIF HAUTE TENSION

(43) Veröffentlichungstag der Anmeldung: 26.12.2018
(73) Patentinhaber: HSP Hochspannungsgeräte GmbH, 53842 Troisdorf (DE)
(72) Erfinder: TITZE, Joachim, 40882 Ratingen (DE); ADAMS, Thomas, 51145 Köln (DE); SCHNITZLER, Tim, 52372 Kreuzau (DE)
(74) Vertreter: Betten & Resch
(86) Internationale Anmeldenummer: PCT/EP2016/055177
(87) Internationale Veröffentlichungsnummer: WO 2017/152985

(56) Entgegenhaltungen:
- CN-A- 101 719 652
- CN-A- 102 338 673
- DE-A1- 10 005 164
- JP-A- H04 296 409
- US-A1- 2002 175 001

## Beschreibung

Hochspannungsvorrichtung mit Temperaturerfassung und Verfahren zur Temperaturerfassung einer Hochspannungsvorrichtung Die Erfindung betrifft eine Hochspannungsvorrichtung mit einem Innenleiter und einen den Innenleiter entlang dessen Längsrichtung umgebenden Isolierkörper.

Eine solche Hochspannungsvorrichtung ist beispielsweise aus der WO 2015/172806 A1 bekannt. Die bekannte Hochspannungsdurchführung ist eine Hochspannungsdurchführung, die üblicherweise dazu eingesetzt wird, den auf Hochspannungspotenzial liegenden Innenleiter durch eine auf Erdpotenzial liegende Wandung zu führen. Beispielsweise im Fall einer Transformatordurchführung bildet die Wandung ein Gehäuse eines Transformators. Üblicherweise ist die Hochspannungsvorrichtung Teil einer Hochspannungsanlage mit mehreren Hochspannungskomponenten wie Transformatoren oder Schaltanlagen.

Der Zustand der Hochspannungsvorrichtung ist daher sowohl für die Zuverlässigkeit der Hochspannungsvorrichtung als auch die Zuverlässigkeit der gesamten mit der Hochspannungsvorrichtung in Verbindung stehenden Hochspannungsanlage relevant.

Eine Temperaturmessung an einer Durchführung mittels eines in den Innenleiter eingeführten Lichtwellenleiters ist aus der JPH 04296409 A bekannt.

Die Aufgabe der Erfindung ist es, eine artgemäße Hochspannungsvorrichtung vorzuschlagen, die möglichst zuverlässig im Betrieb ist.

Die Aufgabe wird durch eine Hochspannungsvorrichtung gemäß Anspruch 1 gelöst. Weitere Ausgestaltungen der Erfindung sind Bestandteil der abhängigen Ansprüche.

Im Betrieb der Hochspannungsvorrichtung ist der Innenleiter von relativ hohen Strömen durchflossen. Dadurch bedingt erhöht sich die Temperatur des Innenleiters. Mit der erfindungsgemäßen Hochspannungsvorrichtung ist eine Möglichkeit bereitgestellt, die Temperatur des Innenleiters beziehungsweise des Isolierkörpers nah am Innenleiter genau und zuverlässig zu messen und auszuwerten. Methoden zur Temperaturmessung mittels Licht sind dem Fachmann bereits bekannt. Beispielsweise kann mittels eines in den Lichtwellenleiter eingespeisten Lichtsignals die Temperatur ortsaufgelöst unter Ausnutzung der Ramanstreuung bestimmt werden. Diese Methode nutzt eine temperaturabhängige Lichtstreuung in dem lichtführenden Lichtwellenleiter. Die Auswertung der Messwerte beinhaltet dann eine Untersuchung der Lichtwellenlänge eines den Lichtwellenleiter durchlaufenden Lichtsignals. Weitherhin sind dem Fachmann relativ kostengünstige Messmethoden bekannt, die eine Temperaturmessung nur an einem Punkt des Lichtwellenleiters, beispielsweise an dessen Ende, erlauben. Die Temperaturmessung an der Hochspannungsvorrichtung bietet die vorteilhafte Möglichkeit einer Zustandsüberwachung der Hochspannungsvorrichtung. Diese kann dazu vorteilhaft genutzt werden, die Zuverlässigkeit der Hochspannungsvorrichtung in deren Betrieb zu erhöhen.

Mit der erfindungsgemäßen Hochspannungsvorrichtung kann die Temperatur besonders genau gemessen werden, weil der Lichtwellenleiter direkt am Innenleiter geführt ist. Dies ist besonders vorteilhaft gegenüber externen Temperaturmessungen, beispielsweise an einem äußeren Gehäuse der Hochspannungsvorrichtung. Gemäß der Erfindung ist der Lichtwellenleiter direkt an dem Innenleiter geführt, wenn der Lichtwellenleiter und der Innenleiter voneinander in einer geringen Entfernung, von nicht mehr als zwei Zentimetern liegen. Beispielsweise kann der Lichtwellenleiter den Innenleiter berühren.

Je nach Konstruktion der Hochspannungsvorrichtung kann der Lichtwellenleiter auch an einem den Innenleiter umgebenden Wickelträger zum Beispiel aus einem dünnen Metallrohr geführt sein. Erfindungsgemäß ist der Lichtwellenleiter in einer den Innenleiter umgebenden Isolationsschicht geführt.

Die Temperaturmessung bei der erfindungsgemäßen Hochspannungsvorrichtung ist besonders zuverlässig, weil die zur Messung benötigten Mittel, insbesondere der Lichtwellenleiter, bereits bei der Herstellung der Hochspannungsvorrichtung in diese integriert wird. Daher kann ein systematischer Messfehler durch nachträgliche Montage einer Messvorrichtung nicht entstehen.

Zudem ist die Temperaturmessung auch während des Betriebes der erfindungsgemäßen Hochspannungsvorrichtung ermöglicht. Insbesondere ist die Temperaturüberwachung nicht auf Laborversuche beschränkt. Bei der Verwendung des Lichtwellenleiters zur Übertragung des Messsignals kann vorteilhaft auf eine Verwendung von elektrisch leitenden Materialien verzichtet werden. Auf diese Weise kann das Messsignal direkt von dem sich auf Hochspannungspotenzial befindenden Innenleiter, zu der sich auf Erdpotenzial befindenden Auswerteeinheit gebracht werden.

Über die vorteilhafte Zustandsüberwachung der Hochspannungsdurchführung selbst hinaus bietet die erfindungsgemäße Hochspannungsvorrichtung Vorteile in Bezug auf eine Hochspannungsanlage, in der die Hochspannungsvorrichtung eingesetzt ist. Ist die Hochspannungsanlage beispielsweise eine Energieübertragungsanlage, so kann die Temperaturerfassung an der Hochspannungsvorrichtung dazu genutzt werden, etwaige Lasteinstellungen und/oder Lastprognosen anhand der gemessenen Temperaturen zu optimieren. Dies ermöglicht eine verbesserte Lastflusssteuerung der gesamten Energieübertragungsanlagen (zum Beispiel einer Hochspannungsgleichstromübertragungsanlage).

Die Auswerteeinheit ist geeigneterweise dazu eingerichtet, ein Lichtsignal zu generieren, das in den Lichtwellenleiter eingespeist werden kann. Die Auswerteeinheit kann darüber hinaus das Lichtsignal dem Lichtwellenleiter zu entnehmen und auszuwerten. Wie bereits erwähnt, beinhaltet die Auswertung des Lichtsignals beispielsweise eine Untersuchung der Wellenlänge des Lichtsignals, das den Lichtwellenleiter durchlaufen hat.

Zweckmäßigerweise ist die Hochspannungsvorrichtung und/oder die Auswerteeinheit mit geeigneten Mittel zum Ein- und Auskoppeln des Lichtsignals ausgestattet.

Der Lichtwellenleiter ist abschnittsweise am Innenleiter entlang dessen Längsrichtung geführt. Der Lichtwellenleiter kann direkt am Innenleiter anliegend geführt sein. Der Lichtwellenleiter ist in einer geringen Entfernung von weniger als zwei Zentimetern vom Innenleiter in einer der den Innenleiter umgebenden elektrischen Isolierschichten geführt.

Auf diese Weise ist eine Anordnung zur besonders genauen Temperaturmessung des Innenleiters bereitgestellt.

Gemäß der Erfindung umfasst die Hochspannungsvorrichtung einen Befestigungsflansch zur Befestigung des Isolierkörpers, wobei der Lichtwellenleiter durch den Befestigungsflansch hindurchgeführt ist und mit einem Anschlusselement versehen ist, das zum Verbinden mit der Auswerteeinheit eingerichtet ist. Der Befestigungsflansch bietet durch seine mechanische Festigkeit eine besonders geeignete Möglichkeit zur Anbringung des Anschlusselements. Der Lichtwellenleiter kann beispielsweise durch eine Nebenisolation zwischen einem harzgetränkten Isolierkörper und einem Gehäuse der Hochspannungsvorrichtung geführt sein. Die Nebenisolation kann beispielsweise ein Gas oder einen Kunststoffschaum umfassen, von dem der Lichtwellenleiter bei der Herstellung der Hochspannungsvorrichtung umschlossen wird. Zur Verbindung des Lichtwellenleiters mit dem Anschlusselement kann der Lichtwellenleiter durch eine geeignete Bohrung im Befestigungsflansch geführt sein.

Gemäß der Erfindung ist die Hochspannungsvorrichtung eine Hochspannungsdurchführung. Dabei umfasst der Isolierkörper ein Aktivteil mit konzentrisch um den Innenleiter angeordneten elektrisch leitenden Steuereinlagen, die durch Isolierlagen voneinander getrennt sind. Die Isolierlagen können beispielsweise geeignetes Papier oder synthetisches Material umfassen, das mit einem Harz imprägniert ist. Die Steuereinlagen dienen zur Feldsteuerung und sind konzentrisch um den Innenleiter angeordnet und durch die Isolierlagen voneinander beabstandet.

Gemäß einer Ausführungsform der Erfindung ist der Lichtwellenleiter abschnittsweise um das Aktivteil geführt. Beispielsweise kann der Lichtwellenleiter spiralförmig um das Aktivteil herum geführt sein.

Das Aktivteil ist von einer Nebenisolation zumindest teilweise umgeben, wobei die Nebenisolation gasförmig, pastös oder schaumförmig ist und der Lichtwellenleiter zumindest abschnittsweise in der Nebenisolation geführt ist.

Nach einer Ausführungsform der Erfindung ist der Lichtwellenleiter in der Nebenisolation zumindest abschnittsweise entlang von Führungselementen geführt.

Als Alternative oder in Kombination dazu kann der Lichtwellenleiter der Nebenisolation zumindest abschnittsweise frei hängend geführt sein.

Es ist anzumerken, dass es im Zusammenhang mit der Erfindung vorteilhaft sein kann, wenn die erfindungsgemäße Hochspannungsvorrichtung mehrere Lichtwellenleiter umfasst. Die Messung der Temperatur des Innenleiters kann auf diese Weise genauer durchgeführt werden. Daher können alle zuvor beschriebenen Merkmale auf weitere Lichtwellenleiter bezogen werden, die mit der erfindungsgemäßen Hochspannungsvorrichtung bereitgestellt sind.

Wie bereits zuvor ausgeführt, ist die erfindungsgemäße Hochspannungsvorrichtung besonders dazu geeignet, in einer Hochspannungsanlage eingesetzt zu werden.

In diesem Zusammenhang besteht die Aufgabe der Erfindung darin, eine Hochspannungsanlage vorzuschlagen, die möglichst zuverlässig im Betrieb ist.

Die Aufgabe wird durch eine Hochspannungsanlage mit wenigstens einer auf Hochspannungspotenzial liegenden Hochspannungskomponente gelöst, bei der die wenigstens eine Hochspannungskomponente mittels der erfindungsgemäßen Hochspannungsvorrichtung vom Erdpotenzial elektrisch getrennt ist.

Die Vorteile der erfindungsgemäßen Hochspannungsanlage ergeben sich aus den entsprechenden Vorteilen der erfindungsgemä-βen Hochspannungsvorrichtung.

Die Hochspannungskomponenten der Hochspannungsanlage können insbesondere Transformatoren, Schaltanlagen, Umrichter oder dergleichen sein.

Im Betrieb der Anlage wird ein Lichtsignal in einen Lichtwellenleiter eingespeist, der zumindest abschnittsweise am Innenleiter geführt ist, aus dem Isolierkörper herausgeführt und mit einer Auswerteeinheit zum Erfassen von Temperaturmesswerten verbunden ist, ein vom Lichtsignal abhängiges Messsignal dem Lichtwellenleiter entnommen und das Messsignal mittels der Auswerteeinheit gemäß dessen Temperaturabhängigkeit ausgewertet.

Mit dem nicht beanspruchten Verfahren kann die Temperatur besonders genau gemessen werden, weil der Lichtwellenleiter direkt am Innenleiter geführt ist. Dies ist besonders vorteilhaft gegenüber externen Temperaturmessungen, beispielsweise an einem äußeren Gehäuse der Hochspannungsvorrichtung.

Wie bereits zuvor erörtert, ist das Verfahren besonders zuverlässig, weil die zur Messung benötigten Mittel, insbesondere der Lichtwellenleiter bereits bei der Herstellung der Hochspannungsvorrichtung in diese integriert wird. Ein nachträglicher systematischer Messfehler durch nachträgliche Montage einer Messvorrichtung kann nicht entstehen.

Zudem ist mit dem Verfahren die Temperaturmessung auch während des Betriebes der erfindungsgemäßen Hochspannungsvorrichtung ermöglicht. Insbesondere ist die Temperaturüberwachung nicht auf Laborversuche beschränkt. Bei der Übertragung der Messwerte an die Auswerteeinheit können vorteilhaft nur elektrisch Isolierende Komponenten verwendet werden.

Die Temperaturabhängigkeit des Messsignals kann beispielsweise durch Auswertung einer Wellenlängenverschiebung gegenüber dem in den Lichtwellenleiter eingespeisten Lichtsignals analysiert werden. Unter Ausnutzung dem Fachmann bekannter physikalischer Effekte kann mit dem Verfahren eine punktuelle oder eine ortsaufgelöste Messung der Temperatur des Innenleiters durchgeführt werden.

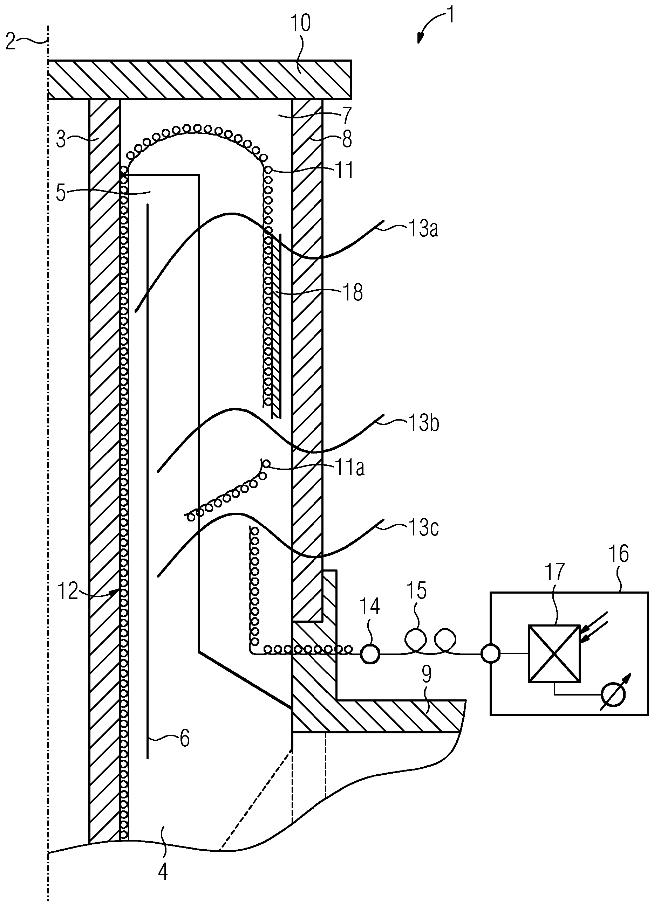

Die Erfindung soll im Folgenden anhand eines in der Figur dargestellten Ausführungsbeispiels weiter erläutert werden.

Die Figur zeigt ein Ausführungsbeispiel einer erfindungsgemäßen Hochspannungsvorrichtung in schematischer Darstellung.

Im Einzelnen ist in der Figur eine erfindungsgemäße Hochspannungsvorrichtung 1 dargestellt, die eine Hochspannungsdurchführung ist. Die Darstellung der Figur zeigt die Hochspannungsvorrichtung 1 in einer teilweisen Querschnittsansicht. Die Hochspannungsvorrichtung 1 ist zylindersymmetrisch aufgebaut. Die Symmetrieachse der Hochspannungsvorrichtung 1 ist als punktgestrichelte Linie 2 dargestellt.

Die Hochspannungsvorrichtung 1 umfasst einen hohlen, zylindrischen Innenleiter 3 aus Aluminium, der von einem Isolierkörper 4 in einer Längsrichtung entlang der Linie 2 umgeben ist. Zwischen dem Innenleiter 3 und dem Isolierkörper 4 kann eine dünne Schicht aus einem Polstermaterial (nicht dargestellt) zur Minderung mechanischer Spannungen in der Hochspannungsvorrichtung 1 angeordnet sein. Im Rahmen der Erfindung ist der Innenleiter nicht notwendigerweise ein Hohlleiter. Der Innenleiter kann ebenso ein Vollleiter sein. Als weiteres Arbeitsmaterial des Innenleiters kommt dabei beispielsweise auch Kupfer in Frage.

Der Isolierkörper 4 umfasst ein Aktivteil 5, das aus einem Papier gebildete Isolierlagen umfasst, die durch elektrisch leitende Steuereinlagen 6 getrennt sind. Die Isolierlagen sind mit einem Epoxidharz getränkt, so dass das Aktivteil 5 einen kompakten Block bildet. Außen am Aktivteil 5 ist eine Nebenisolation 7 aus einem Trockenschaum angeordnet. Gemäß anderer Beispiele kann die Nebenisolation ein isolierendes Gas oder Kombination mehrerer derartiger Stoffe umfassen.

Der Isolierkörper 4 ist von einem Gehäuse 8 umgeben. Einen Teil des Gehäuses 8 bildet ein Befestigungsflansch 9, der dazu vorgesehen ist, die Hochspannungsvorrichtung 1 an einer Wandung einer Hochspannungskomponente zu befestigen. Kopfseitig bildet eine Abdeckung 10 den Abschluss der Hochspannungsvorrichtung 1.

Die Hochspannungsvorrichtung 1 umfasst ferner einen Lichtwellenleiter 11, der abschnittsweise am Innenleiter 3 geführt ist. Dort, in einem Erfassungsbereich 12 wird die Temperatur des Innenleiters 3 punktuell oder ortsauflösbar gemessen. Der Verlauf des Lichtwellenleiters 11 ist in der Figur schematisch und in mehreren Abschnitten dargestellt, wobei die Abschnitte durch geschwungene Linien 13a, 13b und 13c gekennzeichnet sind. Hierbei ist anzumerken, dass die Abschnitte 13a-c nebeneinander im Zusammenhang mit einem Ausführungsbeispiel dargestellt sind. Es ist jedoch ebenfalls denkbar, die Führung des Lichtwellenleiters gemäß den Abschnitten 13a-c als alternative Möglichkeiten der Lichtwellenleiterführung aufzufassen. Demnach ist der Lichtwellenleiter 11 am Innenleiter 3 beispielsweise durch das Polstermaterial im Aktivteil 5 geführt. Dabei ist es nicht notwendig, dass der Lichtwellenleiter 11 in Berührung mit dem Innenleiter 3 steht. Dann führt der Verlauf des Lichtwellenleiters 11 durch die Nebenisolation 7 zurück in Richtung des Befestigungsflansches 9. In dem Zwischenabschnitt 13b-c ist der Lichtwellenleiter 11 um das Aktivteil 5 herum geführt, was figürlich durch einen entsprechend gebogenen Abschnitt 11a des Lichtwellenleiters 11 angedeutet ist In dem Abschnitt 13a-13b sind zu einer örtlichen Fixierung am Lichtwellenleiter geeignete Halter und Führungselemente 18 vorgesehen. In dem Zwischenabschnitt oberhalb der Linie 13a ist der Lichtwellenleiter 11 frei hängend durch die Nebenisolation 7 geführt. Durch eine Bohrung im Befestigungsflansch 9 ist der Lichtwellenleiter 11 aus dem Gehäuse 8 der Hochspannungsvorrichtung 1 herausgeführt. Dort ist der Lichtwellenleiter 11 mit einem Anschlusselement 14 verbunden.

Eine Anschlussleitung 15 verbindet das Anschlusselement 14 mit einer Auswerteeinheit 16. Die Auswerteeinheit 16 ist dazu eingerichtet, mittels einer fotoelektrischen Einheit 17 Lichtsignale in elektrische Signale umzuwandeln und daraus ein Temperaturmesswert zu ermitteln.

Das erfindungsgemäße Temperaturmessverfahren soll im Folgenden schrittweise anhand des in der Figur dargestellten Ausführungsbeispiels erläutert werden.

Zunächst wird in der Auswerteeinheit 16 ein Lichtsignal erzeugt. Das Lichtsignal wird über die Anschlussleitung 15 und das Anschlusselement 14 in den Lichtwellenleiter 11 eingespeist. Das Lichtsignal durchläuft den Lichtwellenleiter 11, insbesondere auch im Erfassungsbereich 12. Dabei wird das Lichtsignal entsprechend der Temperatur des Innenleiters 3 verändert. Anschließend durchläuft das Lichtsignal den Lichtwellenleiter 11 zurück zum Anschlusselement 14, wo es als ein vom Lichtsignal abhängiges Messsignal aus dem Lichtwellenleiter ausgekoppelt und der Auswerteeinheit 16 zugeführt wird. Dabei kann das Lichtsignal an einem Ende des Lichtwellenleiters gespiegelt werden oder auch durch eine Parallelführung des Lichtwellenleiters (in der Figur nicht dargestellt) zum Anschlusselement zurückgeführt werden. Die Auswerteeinheit 16 wandelt das Messsignal in ein elektrisches Signal um. Anschließend wird das Messsignal mittels einer in die Auswerteeinheit integrierten Datenverarbeitungseinheit in ein Temperaturmesswert umgesetzt. Dies kann auch während des Betriebes der Hochspannungsvorrichtung durchgeführt werden, wenn also der Innenleiter 3 auf einem Hochspannungspotenzial liegt, wobei die Auswerteeinheit 16 erdpotenzialnah ist.

## Patentansprüche

1. Hochspannungsvorrichtung (1) mit einem Innenleiter (3) und einen den Innenleiter (3) entlang dessen Längsrichtung (2) umgebenden Isolierkörper (4), wobei wenigstens einen zumindest abschnittsweise am Innenleiter (2) geführten Lichtwellenleiter (11), der aus dem Isolierkörper (4) herausgeführt und mit einer Auswerteeinheit (16) zum Erfassen von Temperaturmesswerten verbindbar ist, wobei die Hochspannungsvorrichtung (1) einen Befestigungsflansch (9) zur Befestigung des Isolierkörpers (4) umfasst, wobei der Lichtwellenleiter (11) durch den Befestigungsflansch (9) hindurchgeführt ist und mit einem Anschlusselement (14) versehen ist, dass zum Verbinden mit der Auswerteeinheit (16) eingerichtet ist, wobei der Lichtwellenleiter abschnittsweise am Innenleiter (3) entlang dessen Längsrichtung in einer Entfernung von weniger als zwei Zentimetern vom Innenleiter in einer der den Innenleiter umgebenden elektrischen Isolierschichten geführt ist, wobei die Hochspannungsvorrichtung (1) eine Hochspannungsdurchführung ist und der Isolierkörper (4) ein Aktivteil (5) mit konzentrisch um den Innenleiter (3) angeordneten elektrisch leitenden Steuereinlagen (6) umfasst, die durch Isolierlagen voneinander getrennt sind, wobei das Aktivteil (4) von einer Nebenisolation (7) zumindest teilweise umgeben ist, wobei die Nebenisolation (7) gasförmig, pastös oder schaumförmig ist und der Lichtwellenleiter (11) zumindest abschnittsweise in der Nebenisolation (7) geführt ist.

2. Hochspannungsvorrichtung (1) nach Anspruch 1,
wobei der Lichtwellenleiter (11) abschnittsweise am Innenleiter (3) anliegend geführt ist.

3. Hochspannungsvorrichtung (1) nach Anspruch 1,
wobei der Lichtwellenleiter (11) abschnittsweise um das Aktivteil (5) geführt ist.

4. Hochspannungsvorrichtung (1) nach Anspruch 1,
wobei der Lichtwellenleiter (11) in der Nebenisolation (7) zumindest abschnittsweise entlang von Führungselementen (18) geführt ist.

5. Hochspannungsvorrichtung (1) nach einem der vorangehenden Ansprüche,
wobei der Lichtwellenleiter (11) der Nebenisolation (7) zumindest abschnittsweise frei hängend geführt ist.

6. Hochspannungsanlage mit wenigstens einer auf Hochspannungspotenzial liegenden Hochspannungskomponente, die mittels der Hochspannungsvorrichtung (1) nach einem der Ansprüche 1 bis 5 vom Erdpotenzial elektrisch getrennt ist.

## Claims

1. High-voltage device (1) having an inner conductor (3) and an insulation body (4) surrounding the inner conductor (3) along its lengthwise direction (2), wherein at least one optical waveguide (11) is guided at least in sections on the inner conductor (2), which is led out of the insulation body (4) and is connectable to an evaluating unit (16) for recording temperature measurement values, wherein the high-voltage device (1) comprises a mounting flange (9) for mounting the insulation body (4), wherein the optical waveguide (11) is guided through the mounting flange (9) and is provided with a connection element (14) that is set up for connection to the evaluating unit (16), wherein the optical waveguide is guided in sections on the inner conductor (3) along the lengthwise direction thereof at a distance of less than two centimeters from the inner conductor in one of the electrical insulating layers surrounding the inner conductor, wherein the high-voltage device (1) is a high-voltage bushing and the insulation body (4) comprises an active part (5) with electrically conductive control inserts (6) concentrically arranged around the inner conductor (3), which are separated from each other by insulating layers, the active part (4) being at least partially surrounded by a secondary insulation (7), the secondary insulation (7) being gaseous, pasty or foamy, and the optical waveguide (11) being guided at least in sections in the secondary insulation (7).

2. High-voltage device (1) according to claim 1, wherein the optical waveguide (11) is guided abutting the inner conductor (3) in sections.

3. High-voltage device (1) according to claim 1, wherein the optical waveguide (11) is guided in sections around the active part (5).

4. High-voltage device (1) according to claim 1, wherein the optical waveguide (11) is guided in the secondary insulation (7) at least in sections along guide elements (18).

5. High-voltage device (1) according to one of the preceding claims, in which the optical waveguide (11) of the secondary insulation (7) is guided in a freely suspended manner, at least in sections.

6. High-voltage system having at least one high-voltage component which is at high-voltage potential and is electrically isolated from the earth potential by means of the high-voltage device (1) according to one of claims 1 to 5.

## Revendications

1. Dispositif à haute tension (1) comportant un conducteur intérieur (3) et un corps isolant (4) entourant le conducteur intérieur (3) le long de sa direction longitudinale (2),
au moins un guide (11) d'ondes lumineuses étant guidé au moins partiellement sur le conducteur intérieur (2), lequel guide d'ondes lumineuses sort du corps isolant (4) et est apte à être relié à une unité d'évaluation (16) pour détecter des valeurs de mesure de température, le dispositif à haute tension (1) comprenant une bride de fixation (9) pour la fixation du corps isolant (4), le guide (11) d'ondes lumineuses étant guidé à travers la bride de fixation (9) et étant pourvu d'un élément de raccordement (14) qui est conçu pour être relié à l'unité d'évaluation (16), le guide d'ondes lumineuses étant guidé partiellement sur le conducteur intérieur (3) le long de sa direction longitudinale à une distance de moins de deux centimètres du conducteur intérieur dans l'une des couches d'isolation électrique entourant le conducteur intérieur, le dispositif à haute tension (1) étant une traversée haute tension et le corps isolant (4) comprenant une partie active (5) ayant des inserts de commande (6) électriquement conducteurs agencés de manière concentrique autour du conducteur intérieur (3), qui sont séparés les uns des autres par des couches isolantes, la partie active (4) étant au moins partiellement entourée par une isolation secondaire (7), l'isolation secondaire (7) étant gazeuse, pâteuse ou sous forme de mousse, et le guide (11) d'ondes lumineuses étant guidé au moins partiellement dans l'isolation secondaire (7).

2. Dispositif à haute tension (1) selon la revendication 1, dans lequel le guide (11) d'ondes lumineuses est guidé par sections en étant adjacent au conducteur intérieur (3).

3. Dispositif à haute tension (1) selon la revendication 1, dans lequel le guide (11) d'ondes lumineuses est guidé partiellement autour de la partie active (5).

4. Dispositif à haute tension (1) selon la revendication 1, dans lequel le guide (11) d'ondes lumineuses est guidé dans l'isolation secondaire (7) au moins partiellement le long d'éléments de guidage (18).

5. Dispositif à haute tension (1) selon l'une des revendications précédentes,
dans lequel le guide (11) d'ondes lumineuses de l'isolation secondaire (7) est au moins partiellement guidé en suspension libre.

6. Installation à haute tension ayant au moins un composant haute tension situé au potentiel haute tension, qui est séparé électriquement du potentiel de terre au moyen du dispositif à haute tension (1) selon l'une des revendications 1 à 5.
